Europäisches Patentamt

European Patent Office

Office européen des brevets

(19)

(11) **EP 1 115 079 A2**

(12) **EUROPEAN PATENT APPLICATION**

(43) Date of publication:
**11.07.2001 Bulletin 2001/28**

(51) Int Cl.⁷: **G06F 17/60**

(21) Application number: **01300034.4**

(22) Date of filing: **04.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Takayasu, Hideki, c/o Sony Corporation Tokyo 141 (JP)** |
| (30) Priority: **07.01.2000 JP 2000005908** | (74) Representative: **Pratt, Richard Wilson et al D. Young & Co, 21 New Fetter Lane London EC4A 1DA (GB)** |
| (71) Applicant: **SONY CORPORATION Tokyo 141 (JP)** | |

(54) **Data processing and controlling currency**

(57)     A currency control method and system defines a unique currency unit for maintaining gross assets of a company, the assets being owned in a plurality of countries, i.e., in a plurality of currencies, despite foreign exchange rate fluctuations. Introduction of the unique currency makes accounting independent of exchange rate fluctuations, thus minimizing losses caused by exchange rate fluctuations. By linking the unique currency unit with a point system which aims at locking in customers or by issuing the unique currency in the form of electronic money which can be exchanged for existing currencies, it is possible to start a new type of financial business in which effects of exchange rate fluctuations are eliminated.

FIG. 1

EP 1 115 079 A2

**Description**

BACKGROUND OF THE INVENTION

1. Field of the Invention

The present invention relates to: a method and system for controlling a currency; a method and system for computing exchange rate between a currency and existing currency; a method and system for determining weight for existing currency; a program storage medium; and a data processing system

Embodiments of the present invention described hereinafter relate to asset-management techniques for ensuring the stability of the value of gross assets of a business enterprise or a wealthy individual, and more specifically, relates to an asset-management technique for stabilizing the value of gross assets of a business enterprise or the like, the assets being owned in numerous currencies, around the world in which foreign exchange rates momentarily fluctuate.

An embodiment of the present invention relates to an asset-management technique for introducing a monetary system for minimizing losses in a business enterprise caused by foreign exchange rate fluctuations and for determining the exchange rate between a new currency and an existing currency, and more specifically, to an asset-management technique for defining a new currency capable of stabilizing the value of gross assets of a business enterprise despite exchange rate fluctuations and for determining the appropriate exchange rate between the new currency and an existing currency.

2. Description of the Related Art

Since the complete liberalization of foreign exchange dealings in April 1998, exchange rate fluctuations have become wider than ever contrary to the prediction of conventional economics that exchange rates would become stable. Exchange rates are influenced by speculative funds which are one thousand times larger than the real economy.

Exchange rates between currencies such as the yen, dollar, and Euro are supposed to be scales reflecting the economic strength of each country or each region. On the contrary, the flow of speculative funds occupies 99.9% of the exchange market, and as much as 200 trillion yen per day flows on the exchange market, which corresponds to substantially half of the gross domestic product (GDP) of Japan (the GDP is computed by subtracting interim input, such as materials cost, from the total amount of added values).

In Japan, it is estimated that a loss of about one trillion yen is incurred annually due to erroneous predictions about exchange rate fluctuations and the purchase of options for hedging.

Today the distribution of exchange rate fluctuations sharply deviates from a normal distribution. It is expected that exchange rate fluctuations will become wider as electronic commerce expands further in future. In the stock market, there is a system called a "circuit breaker"; however, with regard to exchange rate fluctuations, there is no control system except for intervention by a Central Bank.

Exchange rate stability is one of the prime objectives of economics. A change in exchange rules requires a political decision. The solution to the problem of what rules and restrictions should be introduced in the exchange markets has not yet been discovered.

Wild exchange rate fluctuations make accounting of a business enterprise or a wealthy individual difficult and require additional funds for hedging. Furthermore, it becomes difficult to devise business strategies. Such drawbacks cause various losses in manufacturing companies.

In general, it is difficult to predict fluctuations in market prices such as exchange rates and stock prices. Although there are some cases of hedge funds which are successful to a certain degree in their predictions, it is necessary to conduct a considerable amount of fundamental research in order to reach such a state-of-the-art. The burden of research and development costs is excessive.

In contrast, the value of the gross assets of a business enterprise or the like should be constant unless the assets themselves fluctuate or there are profits and losses in real transactions. In other words, the fact that the asset value of a business enterprise fluctuates depending on exchange rates fluctuating every second is ridiculous.

For example, the yen-dollar rate fluctuated 10% in one hour in October 1998. Clearly, such an event occurred due to currency price fluctuations. It doesn't mean that the asset value itself of a company or a country changes within one hour. Is there any technique to maintain the asset value owned by a company or by an individual despite exchange rate fluctuations?

For example, an exchange dealer who carries on a business by buying and selling yen and dollars sets yen-denominated assets and dollar-denominated assets to be of equal value at the closing of the daily dealing. In other words, if the closing exchange rate is ¥100 to the dollar, and if the exchange dealer owns yen-denominated assets of one million yen, the exchange dealer should set the dollar-denominated assets to be of the same value, that is, ten thousand dollars. By setting the assets in different currencies equal to each other, neither profits nor losses are caused when unpredictable exchange rate fluctuations occur in a period when transactions are halted, such as at night. In the above example, if the yen rapidly appreciates in the period when dealer transactions are halted, thus reaching ¥50 to the dollar, a loss in the dollar-denominated assets can be compensated for by the yen-denominated assets. Such an asset-management method is referred to as a "square method".

A case is described in which a well-known method used by exchange dealers, such as the square method, is applied to asset management for a company. Specifically, the company sets yen-denominated assets and dollar-denominated assets to be equal, that is, the company sets the asset value in yen and the asset value in dollars to be equal to each other. Therefore, it is expected that the value of gross assets of the company will be maintained despite exchange rate fluctuations.

The square method requires to change the ratios among assets in different currencies to be changed in accordance with time-varying exchange rates. If the assets of a company are successively exchanged from yen to dollar or vice versa every time the exchange rate changes, a great loss is caused by charges for remittance. It is unrealistic to easily change huge assets of a large-scale enterprise to yen-denominated assets or to dollar-denominated assets.

The world economy is composed of a plurality of currencies such as the yen, dollar, Euro, and the like. If there are three or more currencies, the allocation of assets among the currencies is not self-evident.

There are several methods for minimizing losses caused by exchange rate fluctuations, other than intervention by a Central Bank. For example, "forecasting" detects the trend of exchange rate fluctuations using high technology; "hedging" rapidly discovers an advantageous financial derivative product; and a currency other than existing currencies, and referred to herein as "a unique currency", can be issued.

Among the above methods, the issue of a unique currency is a long-established method known in the field of economics, which aims to ultimately reduce the number of currency exchanges.

The unit which issues a currency is generally a "country". In contrast, a "pan-national currency" is a unique currency which is effective in a unit greater than a country (e.g., a plurality of countries). A typical example of this is the "Euro". The Euro can solve problems of exchange rate fluctuations in Europe.

The pan-national currency is not designed for a relatively small-sized currency management entity, such as a business enterprise or a wealthy individual. Therefore, the pan-national currency cannot stabilize the asset value of a business enterprise.

A unique currency effective in local units smaller than a country is referred to as a "regional currency". Although there are no cases of regional currencies being used in Japan, there are approximately 2000 cases of regional currencies being used around the world.

For example, a regional currency called the "hour" is controlled by a private-sector entity in Ithaca, in the United States. The "hour" aims to return to each person a consideration in proportion to labor or the number of hours worked. For example, one hour's labor corresponds to 1 hour. At present, hours valued at about 200 million yen are in circulation annually.

Basically, this type of regional currency is circulatable within a region in which people can see each other's faces. If such a regional currency is applied to an international or a multi-national business enterprise carrying on business worldwide, the overall accounting of branch offices and branch stores dispersed in different countries cannot be made universal.

Examples of regional currency include, in addition to the "hour" in Ithaca, the "domark" (passbook managed by individuals) in Potsdam, Germany, the "favour" (cheque managed by a private-sector entity) in Calderdale, England, and the "wir" (electronic money managed by Wir Bank) widely used throughout Switzerland.

In general, the regional currency is operatively associated with a local currency. In other words, the regional currency can be converted at a predetermined exchange rate. In addition, transactions in the regional currency are subject to taxation.

The regional currency is not intended to be used for speculation purposes. For example, if a currency control entity detects the use of its regional currency for speculation purposes, the currency control entity stops issuing the currency or nullifies the currency itself. As a result, great losses are caused to speculators.

So-called "points" issued by various enterprises including service business enterprises and "mileage" are regarded as types of pseudo-currency. The pseudo-currency operated by a business enterprise mainly aims at reinforcing the locking in of customers and is not circulatable, which is the fundamental ability of currency. In other words, the pseudo-currency cannot be exchanged for products of companies other than those specified, and the psuedo-currency cannot be converted to a real currency. Furthermore, the use of the pseudo-currency to pay taxes is not allowed. In an extreme case, the ownership of the pseudo-currency is such that it exclusively belongs to a single person. There may be cases in which points accumulated by one person cannot be transferred or sold to another person.

SUMMARY OF THE INVENTION

An embodiment of the present invention seeks to provide an improved asset-management technique for ensuring the stability of the value of gross assets of a business enterprise or a wealthy individual.

Another embodiment of the present invention seeks to provide an improved asset-management technique for stabilizing the value of gross assets of a business enterprise or the like, the assets being owned in a number of currencies, around the world in which foreign exchange rates momentarily fluctuate.

Yet another embodiment of the present invention seeks to provide an improved asset-management technique for introducing a monetary system which minimizes losses in a business enterprise caused by foreign exchange rate fluctuations and for determining the exchange rate between a unique currency and an existing currency.

Yet another embodiment of the present invention seeks to provide an improved asset-management technique for defining a currency unit S capable of stabilizing the value of gross assets of a business enterprise or the like despite exchange rate fluctuations and for determining the optimal exchange rate between the unique currency and an existing currency.

A first aspect of the present invention, currency control method or system for defining an assets currency units for an owner of assets owned in a plurality of existing currencies. The currency control method or system includes an estimating step or an estimating unit for estimating the gross asset value owned by the asset owner in each of the existing currencies. A computing step or a computing unit computes the ratios among the asset values owned by the asset owner in the existing currencies. A determining step or a determining unit computes a weighted average based on current exchange rates among the existing currencies, the exchange rates being weighted by the ratios among the asset values in the existing currencies, thus determining that the weighted average is used as the assets currency units.

According to a second aspect of the present invention, a currency control method or system for defining an assets currency units for an owner of assets owned in a plurality of existing currencies is provided including an estimating step or an estimating unit for estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_j x_{kj}(0) w_j(0) .$$

A computing step or a computing unit computes the ratio $a_j$ of the asset value $x_{kj}(0) \cdot w_j(0)$ owned at time t = 0 by the asset owner in each existing currency j to the gross asset value based on the following equation:

$$a_j = \frac{x_{kj}(0) \cdot w_j(0)}{\sum_i x_{ki}(0) \cdot w_i(0)} .$$

A determining step or a determining unit computes a weighted average $l_s(0)$ using an exchange rate $x_{jk}(0)$ for exchanging existing currency k for each existing currency j at time t = 0, the exchange rate $x_{jk}(0)$ being weighted by the ratio $a_j$ of the asset value in each existing currency j based on the following equation, thus determining that the weighted average is used as the assets currency unit s:

$$l_s(0) = \sum_j a_j x_{jk}(0) ,$$

where $x_{jk}(t)$, $w_j(t)$, $L_k(t)$, and $1_s(t)$ are functions of time t.

According to a third aspect of the present invention, an exchange rate computing method or system for computing the exchange rate between an assets currency S, defined by an owner of assets owned in a plurality of existing currencies, and existing currency i is provided including a first computing step or a first computing unit for computing an exchange rate $x_{is}(t)$ for exchanging assets currency S for existing currency i at time t based on the following equation:

$$x_{is}(t) = \sum_j x_{ij}(t)a_j x_{jk}(0) ,$$

where:

$x_{ij}(t)$ = exchange rate for exchanging existing currency j for existing currency i at time t; and
$a_j$ = ratio of assets owned in existing currency j by the asset owner.

The exchange rate computing method or system according to the third aspect of the present invention further includes a second computing step or a second computing unit for computing an exchange rate $x_{si}(t)$ for exchanging existing currency i for assets currency S at time t based on the following equation:

$$x_{si}(t) = \frac{1}{x_{is}(t)} = \frac{1}{\sum_j x_{ij}(t)a_j x_{jk}(0)} .$$

According to a fourth aspect of the present invention, a weight determining method or system for determining a weight for each existing currency by an owner of assets in a plurality of existing currencies is provided including a using step or a using unit for using the ratio $a_j$ of assets owned in existing currency j by the asset owner to the gross asset value as a weight for existing currency j.

According to a fifth aspect of the present invention, a weight determining method or system for determining a weight for each existing currency by an owner of assets in a plurality of existing currencies is provided including an estimating step or an estimating unit for estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_j x_{kj}(0)w_j(0) .$$

A determining step or a determining unit computes the ratio $a_j$ of the asset value $x_{kj}(0) \cdot w_j(0)$ owned at time t = 0 by the asset owner in each existing currency j to the gross asset value based on the following equation, thus determining that the ratio $a_j$ is used as a weight for existing currency j:

$$a_j = \frac{x_{kj}(0) \cdot w_j(0)}{\sum_i x_{ki}(0) \cdot w_i(0)} .$$

According to a sixth aspect of the present invention, a program storage medium having stored therein a computer program in a computer-readable format for instructing a computer system to perform a process for defining an assets currency unit S for an owner of assets owned in a plurality of existing currencies is provided. The computer program includes a step of estimating the gross asset value owned by the asset owner in each of the existing currencies. In a computing step, the ratios among the asset values owned by the asset owner in the existing currencies are computed. In a determining step, a weighted average is computed based on current exchange rates among the existing currencies, the exchange rates being weighted by the ratios among the asset values in the existing currencies, thus determining that the weighted average is used as the assets currency unit s.

According to a seventh aspect of the present invention, a program storage medium having stored therein a computer program in a computer-readable format for instructing a computer system to perform a process for defining an assets currency unit S for an owner of assets owned in a plurality of existing currencies is provided. The computer program includes a step of estimating the gross asset value of the asset owner by computing, using an exchange rate

$x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_j x_{kj}(0)w_j(0) .$$

In a computing step, the ratio $a_j$ of the asset value $x_{kj}(0) \cdot w_j(0)$ owned at time t = 0 by the asset owner in each existing currency j to the gross asset value is computed based on the following equation:

$$a_j = \frac{x_{kj}(0) \cdot w_j(0)}{\sum_i x_{ki}(0) \cdot w_i(0)} .$$

In a determining step, a weighted average ls(0) is computed using an exchange rate $x_{jk}(0)$ for exchanging existing currency k for each existing currency j at time t = 0, the exchange rate $x_{jk}(0)$ being weighted by the ratio $a_j$ of the asset value in each existing currency j based on the following equation, thus determining that the weighted average is used as the assets currency unit S:

$$l_s(0) = \sum_j a_j x_{jk}(0) .$$

According to an eighth aspect of the present invention, a program storage medium having stored therein a computer program in a computer-readable format for instructing a computer system to perform a process for computing the exchange rate between an assets currency S, defined by an owner of assets owned in a plurality of existing currencies, and existing currency i is provided. The computer program includes the step of computing an exchange rate $x_{is}(t)$ for exchanging assets currency S for existing currency i at time t based on the following equation:

$$x_{is}(t) = \sum_j x_{ij}(t)a_j x_{jk}(0) ,$$

where:

$x_{ij}(t)$ = exchange rate for exchanging existing currency j for existing currency i at time t; and
$a_j$ = ratio of assets owned in existing currency j by the asset owner.

In the program storage unit according to the eighth aspect of the present invention, the computer program may further include the step of computing an exchange rate $X_{si}(t)$ for exchanging existing currency i for assets currency S based on the following equation:

$$x_{si}(t) = \frac{1}{x_{is}(t)} = \frac{1}{\sum_j x_{ij}(t)a_j x_{jk}(0)} .$$

According to a ninth aspect of the present invention, a program storage medium having stored therein a computer program in a computer-readable format for instructing a computer system to perform a process for determining a weight for each existing currency by an owner of assets in a plurality of existing currencies is provided. The computer program includes the step of using the ratio $a_j$ of assets owned in existing currency j by the asset owner to the gross asset value as a weight for existing currency j.

According to a tenth aspect of the present invention, a program storage medium having stored therein a computer program in a computer-readable format for instructing a computer system to perform a process for determining a weight for each existing currency by an owner of assets in a plurality of existing currencies is provided. The computer program includes a step of estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$ L_k(0) \;=\; \sum_j x_{kj}(0) w_j(0) . $$

In a determining step, the ratio $a_j$ of the asset value $x_{kj}(0) \cdot w_j(0)$ owned at time t = 0 by the asset owner in each existing currency j to the gross asset value is computed based on the following equation, thus determining that the ratio $a_j$ is used as a weight for existing currency j:

$$ a_j \;=\; \frac{x_{kj}(0) \cdot w_j(0)}{\sum_i x_{ki}(0) \cdot w_i(0)} . $$

According to an eleventh aspect of the present invention, a data processing system for controlling assets currency S for an owner of assets in a plurality of existing currencies is provided including a computer processor for processing data. A data storage unit stores data. A first unit initializes the data storage unit. A second unit executes data processing concerning an estimate of the gross asset value owned by the asset owner in each of the existing currencies. A third unit executes data processing concerning computation of the ratios among the asset values owned by the asset owner in the existing currencies. A fourth unit executes data processing concerning determination of a value of the assets currency S for the asset owner. The fourth unit computes a weighted average based on current exchange rates among the existing currencies, the exchange rates being weighted by the ratios among the asset values in the existing currencies, thus determining that the weighted average is used as the value of the assets currency unit S.

According to a twelfth aspect of the present invention, a data processing system for controlling a weight for each existing currency by an owner of assets in a plurality of existing currencies is provided including a computer processor for processing data. A data storage unit stores data. A first unit initializes the data storage unit. A second unit executes data processing concerning determination of a weight for each existing currency j. The second unit determines that the ratio aj of assets owned in existing currency j by the asset owner to the gross asset value is used as a weight for existing currency j.

According to the present invention, the ratio of assets owned by a business enterprise in currency k to the gross asset value is used as a weight ak to be applied to each existing currency k. The gross asset value of the business enterprise measured in new assets currency S which is set using the weight ak is independent of exchange rate fluctuations in existing currencies. By setting the value of the assets currency S in proportion to the allocation of assets, the gross asset value of the business enterprise measured in the assets currency S is invariable despite exchange rate fluctuations in the real world or in the market economy.

For example, even when assets of a certain business enterprise are owned in a plurality of states (i.e., even when the gross assets of the business enterprise are owned in a plurality of currencies), according to the present invention, it is possible to define an assets currency unit S for maintaining the gross assets despite foreign exchange rate fluctuations.

By introducing the foregoing assets currency S, accounting independent of exchange rate fluctuations can be performed, thus minimizing losses caused by exchange rate fluctuations. By linking the assets currency units with a point system which aims at locking in customers and by issuing the assets currency S in the form of electronic money which is exchangeable for existing currencies, it is possible to start a new type of financial business in which effects of exchange rate fluctuations are eliminated.

If the gross assets of the business enterprise based on the assets currency S are invariable, the business enterprise can always supply customers around the world within a currency control space with its products at a constant price. As a result, as long as the customers use the assets currency S, the customers are liberated from price uncertainties, and hence the reliability of product distribution is enhanced. It is also expected that the distribution business itself will be stimulated.

A program storage medium according to the sixth to tenth aspects of the present invention provides a general-purpose computer system for executing various types of program code with a computer program in a computer-readable format. The medium is a removable and portable storage medium, such as a compact disk (CD), a floppy disk (FD), or a magneto-optical disk (MO). Alternatively, it is technically possible to supply the computer program to a specific computer system via a transmission medium such as a network (network can be wireless or can be wired).

Such a program storage medium defines the structural or functional cooperative relationship between the computer program and the storage medium for implementing predetermined computer program functions by a computer system. In other words, by installing a predetermined computer program in a computer system through a program storage medium according to the sixth to tenth aspects of the present invention, the cooperative operation is performed by the computer system. Therefore, the same operation and advantages as those in the first to fifth aspects of the present invention can be obtained.

According to the present invention, it is possible to provide an improved asset-management technique for ensuring the stability of the value of gross assets of a business enterprise or a wealthy individual.

According to the present invention, it is also possible to provide an improved asset-management technique for stabilizing the value of gross assets of a business enterprise or the like, the assets being owned in a number of currencies, around the world in which foreign exchange rates momentarily fluctuate.

According to the present invention, it is also possible to provide an improved asset-management technique for introducing a monetary system which minimizes losses in a business enterprise caused by foreign exchange rate fluctuations and for determining the exchange rate between a currency (the assets currency S) and an existing currency.

According to the present invention, it is also possible to provide an improved asset-management technique for issuing a currency S capable of stabilizing the value of gross assets of a business enterprise or the like despite exchange rate fluctuations and for determining the appropriate exchange rate between the unique currency and an existing currency.

When a currency S according to the present invention is introduced in a specific business enterprise which carries on business over a plurality of countries in which different currency units are used, it is expected that the following advantages will be caused.

(1) Within the business enterprise, the number of exchanges can be reduced to a minimum.

Using the currency S according to the present invention, the number of exchanges within the business enterprise can be reduced to zero. The number of exchanges outside the business enterprise is also minimized. By increasing buffers in the enterprise bank, i.e., by increasing national/local-currency holdings, the number of exchanges can be reduced to be as close to zero as possible.

(2) The locking in of customers is reinforced.

The currency S within a particular business enterprise can be stated differently as an enterprise currency. Those who are going to purchase products of the business enterprise using the enterprise currency are reliably supplied with products at a low price. Therefore, the locking in of customers is reinforced.

(3) Funds can be collected from individuals and business enterprises who dislike speculation.

The currency S according to the present invention is closely linked with the real economy. It is thus possible to collect an abundance of funds and to perform fund management. The business enterprise, which is the parental body for issuing the unique currency, is protected from going bankrupt in a community. In other words, the business enterprise itself becomes essential to economic activities.

(4) Funds and revenues in the business enterprise can be practically doubled.

The enterprise bank can operate foreign currencies, that is, national/local currencies, input thereto. The enterprise bank can issue the same amount (same value) of the currency S as the amount of foreign currency holdings and make good use of the currency S in funds transfer within the business enterprise.

(5) The flow of money within consumers and the business enterprise can be monitored.

By configuring the currency S in the form of electronic money, all sequential transfers of the currency S are logged and controlled by a computer. Analysis of the log data reveals consumer behavior and economic fluctuations. It is also possible to make use of the data processing results in finding new businesses.

Currency S or currency unit S is preferably a unique currency as described in the following illustrative description.

A better understanding of the present invention will become apparent from the following description of the preferred embodiments with reference to the attached drawings.

BRIEF DESCRIPTION OF THE DRAWINGS

Fig. 1 schematically shows the structure of a unique currency control space 100 and the circulation of a currency used in an illustrative system according to the present invention; and

Fig. 2 is a block diagram of the structure of an automated currency control system 10 according to an embodiment of the present invention.

DESCRIPTION OF THE PREFERRED EMBODIMENTS

As described in the related art, it is very difficult to stabilize immense gross assets of a business enterprise or a wealthy individual when existing currencies which are apt to fluctuate are used. In embodiments of the present invention, the fundamental idea is changed, and the use of existing currencies is abandoned. Specifically, an embodiment of the present invention proposes to introduce a unique and new currency unit for maintaining gross assets of a company despite exchange rate fluctuations.

A plurality of existing currencies such as the yen, the dollar, the Euro and the like is used in the real world. It is preferable that the value of assets be independent of exchange rate fluctuations in the real world. An embodiment of the present invention defines a new currency unit based on assets owned by a company or by a wealthy individual, which is defined using a weighted average of existing currencies (this is described in detail hereinafter), and hence the effects of exchange rate fluctuations on the asset value are minimized.

By introducing a new currency unit according to an embodiment of the present invention, an international or a multi-national business enterprise can make the entire internal accounting universal irrespective of exchange rate fluctuations. In doing so, unified accounting can be performed.

Such a new currency unit used by a company or by a wealthy individual is referred to as a "unique currency" (or an "enterprise currency") hereinafter.

A System configuration

The present invention will be better understood from the following description of the illustrative embodiments with reference to the accompanying drawings.

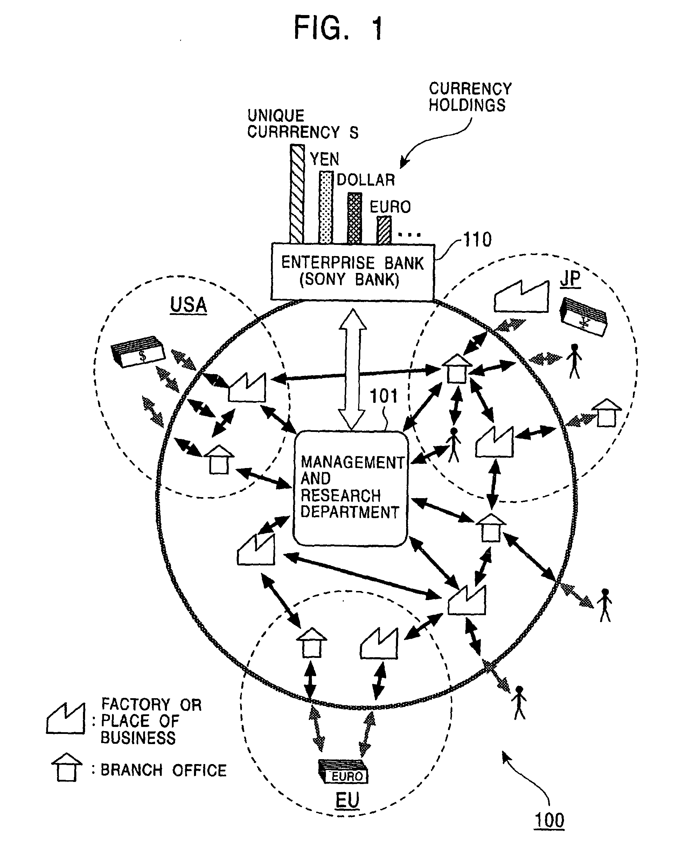

Fig. 1 outlines the structure of a unique currency control space 100 according to an embodiment of the present invention and the circulation of a currency in the unique currency control space 100. Each part is described below.

The unique currency control space 100 is run by a business enterprise which carries on business over a plurality of countries in which different currency units are used (i.e., the business enterprise has branch offices, branch stores, factories, and places of business in different countries). It is assumed that the name of this enterprise is "Sony".

In the unique currency control space 100, the circulation of a unique currency is authorized. It is assumed hereinafter that the unit of the unique currency is "S". In the unique currency control space 100, all transactions including buying and selling of goods and payments for various types of considerations are basically completed in the unique currency S. Basically, economic transactions between branch stores and branch offices of a single enterprise (or business enterprise group) or economic transactions between places of business are carried out based on the unique currency S.

Within the business enterprise, that is, within the unique currency control space 100, the flow of all individual assets, such as payments for salaries of employees and savings, is conducted in the unique currency S.

In the unique currency control space 100, there is an enterprise bank 110 (it is assumed that the enterprise bank 110 is "Sony bank" hereinafter) for issuing the unique currency S which is effective at least within the enterprise. The Sony bank 110 also functions as the interface between the unique currency S and an existing local currency used in each country.

For example, when a person in Japan outside Sony requests the unique currency S, the Sony bank 110 agrees to exchange yen for unique currency S at a predetermined exchange rate. When a person outside Sony in a country other than Japan requests to convert the dollar or the Euro to the unique currency S, the Sony bank 110 performs conversion to the unique currency S at an exchange rate set for each local currency. When a person within Sony requests to convert the unique currency S to a local currency such as to the yen or to the dollar, the Sony bank 110 performs conversion to the local currency at a predetermined exchange rate.

When performing conversion, the Sony bank 110 applies a predetermined exchange rate. In addition, the Sony bank 110 can levy a charge to the person who requested the conversion. For example, different charges or different unit costs can be applied to conversion from a local currency to the unique currency S and to conversion from the unique currency S to a local currency.

Preferably, the gross amount of the unique currency S in circulation is of the same value (same amount) as the gross amount of local currencies (the yen, dollar, Euro, and the like) owned by the Sony bank 110. In such a case, it is possible to respond to all requests made by owners of the unique currency S to exchange the unique currency S for local currencies.

Local currencies such as the yen, dollar, and Euro, which are used in countries (or regions), and which are owned by the Sony bank 110, correspond to the values of assets owned by Sony in countries (or regions) such as Japan, the United States, and Europe, respectively.

Setting of the unique currency S and determination of the exchange rate between the unique currency S and each of existing national/local currencies are performed by the Sony bank 110 or a management and research department 101 provided in the unique currency control space 100.

B Introduction of unique currency unit and determination of exchange rate between unique currency and existing currency

Introduction of the unique currency unit S and determination of the exchange rate between the unique currency S and an existing currency are performed by a central authority, such as the enterprise bank 110 or the management and research department 101, in the unique currency control space 100.

B-1 Introduction of unique currency S

A process for setting the unique currency unit S in the business enterprise is described next.

(1) Estimate gross asset value of business enterprise in each currency

A business enterprise carrying on business worldwide owns assets in different forms, such as land, buildings, cash, stock, and credit, in a plurality of countries. In order to introduce a unique currency, the gross asset value owned by the business enterprise in each local currency is estimated. For example, there are yen-denominated assets of _ yen, dollar-denominated assets of _ dollars, and the like.

It is assumed that $w_k(t)$ indicates the estimate of assets denominated in a certain currency k at time t, and $x_{kj}(t)$ indicates the exchange rate for exchanging currency j for currency k. In order to simplify the description, the difference between a buying-price exchange rate and a selling-price exchange rate and charges for remittance are ignored hereinafter. Also, it is assumed that an exchange of one currency for another is interchangeable, and hence equation $x_{kj}(t) \cdot x_{jk}(t) = 1$ holds true (when there is a difference of 5% between buying price and selling price, the right side becomes 0.95 instead of 1).

The gross assets $L_k(t)$ of the business enterprise estimated in currency k at time t are expressed as:

$$L_k(t) = \sum_j x_{kj}(t)w_j(t) \quad \ldots (1)$$

(2) Compute ratios among gross assets in currencies owned by business enterprise

The ratios among the gross assets in different currencies owned by the business enterprise are computed. The computational result is expressed such that the yen-denominated assets are 40%, the dollar-denominated assets are 30%, the Euro-denominated assets are 10%, and so forth.

The ratio $a_k$ of the enterprise's assets owned in currency k to the gross assets satisfy:

$$\sum_k a_k = 1, \quad a_k \geq 0 \quad \ldots (2)$$

At present (t = 0), the enterprise's assets owned in currency j denominated in currency k are expressed as $x_{kj}(0) \cdot w_j(0)$. Based on equation (1), the gross assets of the business enterprise denominated in currency k are expressed as:

$$\sum_{i} x_{ki}(0) \cdot w_i(0) \quad \ldots (3)$$

Therefore, the ratio $a_j$ of the enterprise's assets owned in each currency j to the gross assets is expressed as:

$$a_j = \frac{x_{kj}(0) \cdot w_j(0)}{\sum_i x_{ki}(0) \cdot w_i(0)} \quad \ldots (4)$$

(3) Set value of unique currency S

A weighted average is computed based on the present exchange rate weighted by the ratio $a_k$ of the asset value in each existing currency k to the gross asset value. The weighted average is set as the value of a currency unit of the unique currency S in the business enterprise.

The exchange rate for exchanging currency k for currency j at present (t = 0) is expressed as $x_{jk}(0)$. The ratio of the enterprise's assets owned in each existing currency j to the gross assets is expressed as $a_j$ (see equation (4)).

The value of the currency unit of the unique currency S is set by the weighted average, which is computed based on the exchange rate weighted by the ratio of the asset value in each existing currency to the gross asset value. The value of unit amount ls(0) of the unique currency S at present (t = 0) corresponding to existing currency unit k, that is, the unit value of the unique currency S denominated in currency k, is expressed as:

$$l_s(0) = \sum_{j} a_j x_{jk}(0) \quad \ldots (5)$$

For example, when the exchange rate is 1 dollar = 120 yen = 1.1 Euro = ..., and when the ratios among the assets denominated in yen, dollar, Euro, and so forth (i.e., the allocation of assets) are 0.4, 0.3, 0.1, and so forth, the business enterprise sets the value of the unique currency S corresponding to the dollar at $0.4 \times 120$ (yen) + $0.3 \times 1$ (dollar) + $0.1 \times 1.1$ (Euro) + ....

In short, the weighted average is computed based on the exchange rate weighted by the weight $a_k$, which is the ratio of the asset value in each existing currency k to the gross asset value, and the weighted average is set as the value of the unique currency S. The method for setting the value of a new currency based on the weighted average of currencies is generally referred to as a "basket method".

B-2 Exchange rate between unique currency S and existing currency

In the circumstances of economic activities inside and outside the business enterprise, the necessity for exchanging unique currency S for an existing currency or vice versa arises. For example, opportunities to use the unique currency S often arise outside the business enterprise in order to carry out transactions with other business enterprises and to supply products and services to individuals outside the business enterprise (such as general customers).

The business enterprise for managing the unique currency S is required to ensure exchangeability between its own unique currency S and each existing national/local currency. As is generally known, exchange rates between existing currencies momentarily fluctuate. In order to eliminate buying and selling of the unique currency S for speculation purposes and to maintain the gross asset value of the business enterprise, it is necessary to set the appropriate exchange rate between the unique currency S and each existing currency.

In the present embodiment, the exchange rate $x_{is}(t)$ for exchanging unique currency S for existing currency i at time t is expressed as:

$$x_{is}(t) = \sum_{j} x_{ij}(t) a_j x_{jk}(0) \quad \ldots (6)$$

In contrast, the exchange rate $x_{si}(t)$ for exchanging existing currency i for unique currency S at time t is expressed as the reciprocal of $x_{is}(t)$ (where the exchange is the exchange of equivalents and is free of charge):

$$x_{s1}(t) = \frac{1}{x_{is}(t)} = \frac{1}{\sum_j x_{ij}(t)a_j x_{jk}(0)} \quad \dots(7)$$

B-3 Prove that gross asset value of business enterprise measured in unique currency S is invariable

In the embodiment of the present invention, the "basket method" for setting the value of a new currency based on the weighted average of currencies is used.

As described above, in the present embodiment, the ratio of assets owned by the business enterprise in each currency k to the gross assets is used as the weight $a_k$ to be applied to each currency k. The gross assets measured in new currency thus obtained using the weight $a_k$ is independent of exchange rate fluctuations in existing currencies. By setting the value of the unique currency S in proportion to the asset allocation, the gross asset value of the business enterprise measured in unique currency S is invariable despite changes in exchange rates in the real world or in the market economy.

The independence of exchange rate fluctuations, that is, the fact that the gross asset value of the business enterprise measured in unique currency S is invariable, is proven below.

Using the exchange rate expressed by equation (7), the gross asset value $L_s(t)$ of the business enterprise measured in unique currency S at time t is expressed as:

$$L_s(t) = \sum_j x_{sj}(t)w_j(t) \quad \dots(8)$$

The estimate of the right side of equation (8) is converted into a certain currency m in order to simplify the description, where currency m can be an existing currency or a virtual currency of a virtual currency value:

$$L_s(t) = x_{sm}(t)\sum_j x_{mj}(t)w_j(t)$$

$$= \frac{\sum_j x_{mj}(t)w_j(t)}{\sum_j x_{mj}(t)a_j x_{jk}(0)} \quad \dots(9)$$

Using equation (9), the variation $L_s(t)-L_s(0)$ in the gross assets of the business enterprise caused by exchange rate fluctuations in the period from time 0 to time t is expressed as:

$$L_s(t) - L_s(0) = \frac{\sum_j x_{mj}(t)\left\{w_j(t) - a_j x_{jk}(0)\sum_i x_{ki}(0)w_i(0)\right\}}{\sum_j x_{mj}(t)a_j x_{jk}(0)} \quad \dots(10)$$

If the right side of equation (10) is zero, it indicates that the gross assets of the business enterprise measured in unique currency S are invariable, that is, the gross assets are not influenced by fluctuations in existing currencies. It is assumed that the right side of the numerator is zero, thus yielding:

$$w_j(t) - a_j x_{jk}(0) \sum_i x_{ki}(0) w_i(0) = 0 \qquad \ldots (11)$$

This is equivalent to equation (4) for computing the ratio $a_j$ of assets owned by the business enterprise in each currency j to the gross assets. In other words, the weighted average is obtained using the ratio of assets owned in each existing currency to the gross asset value as the weight, and the weighted average is used as the unique currency S. Therefore, the gross asset value of the business enterprise based on the unique currency S is invariable irrespective of exchange rate fluctuations (Q.E.D.).

If the gross assets of the business enterprise based on the unique currency S are invariable, the business enterprise can always provide customers around the world within the unique currency control space 100 with its products at a constant price. As a result, as long as the customers use the unique currency S, the customers are liberated from price uncertainties, and hence the reliability of product distribution is enhanced. More and more customers are attracted, and it is expected that the distribution business itself will be stimulated.

The ratio $a_j$ of assets in existing currency j to the gross asset value (i.e., the asset allocation among currency holdings), which is expressed by equation (4), is the value set at initial time (t = 0). In the real world, however, the asset value $w_j(t)$ in each existing currency fluctuates according to time. In accordance with exchange rate fluctuations, the ratios among assets in existing currencies fluctuate.

Therefore, $a_j$ should be regarded as a function of time. Similarly, equation (6) for defining the exchange rate for exchanging unique currency S for existing currency i and equation (7) for defining the exchange rate for exchanging existing currency i for unique currency S should be regarded as functions of time. These functions should be appropriately updated.

The ratio $a_j$ of assets owned in each existing currency and the exchange rate between each existing currency and the unique currency S are not required to be updated every second, unlike exchange rates between existing currencies and time-series data for other economic activities. It is sufficient for the ratio $a_j$ and the exchange rate between each existing currency and the unique currency S to be modified in response to the occurrence of a predetermined economical event, such as a variation greater than a predetermined value in an exchange rate between existing currencies or a variation greater than a predetermined value in the allocation of assets owned by the business enterprise among currencies.

B-4 System for automatically controlling unique currency S

Exchange rates are one type of time-series data which momentarily vary in the real world or in the market economy. As is commonly known in the fields of information processing and economics, time-series data can be analyzed by a computer system to obtain a desired numerical result. The foregoing series of processes concerning control of the unique currency S can be performed by, for example, a computer system, and hence the processes can be automated. An automated currency control system 10 for automatically controlling the unique currency S is described below.

The automated currency control system 10 can be formed of a dedicated hardware unit. Alternatively, an application concerning unique currency control (hereinafter referred to as "unique currency control application") can be executed by a general-purpose computer system, thus implementing the automated currency control system 10. The computer system for executing the unique currency control application is installed at, for example, the enterprise bank 110 or the management and research department 101.

The unique currency control application uses equation (4) to compute the ratio $a_j$ of the asset value owned by the business enterprise in each existing currency j to the gross asset value, that is, the allocation of assets among the currencies.

The unique currency control application uses equation (5) to determine the unit value ls(0) of the unique currency S (i.e., the unit value of the unique currency S denominated in currency k) and to control the issue of the unique currency S. The unique currency S issued by the unique currency control application can be so-called electronic money instead of physical money such as paper money and coins.

The unique currency control application uses equation (6) and/or equation (7) to compute the exchange rate between the unique currency S and each existing currency. Based on the computed exchange rate, the unique currency control application can respond to a request for conversion of the unique currency S into an existing currency or vice versa when carrying out transactions with other business enterprises or supplying products and services to individuals outside the business enterprise (such as general customers).

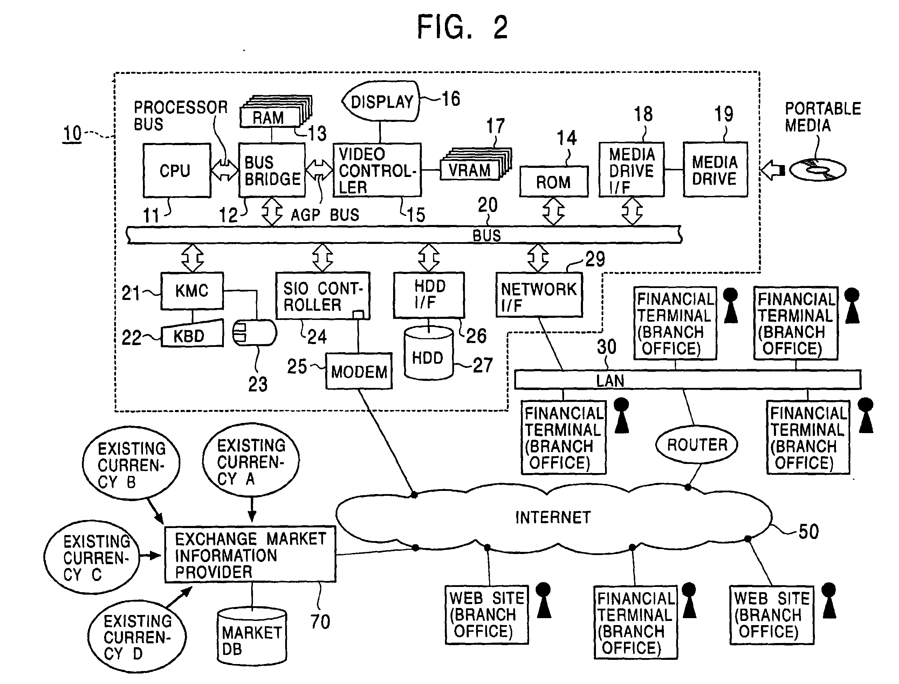

Fig. 2 shows an example of the system configuration of the automated currency control system 10 of the present embodiment. Each part of the automated currency control system 10 is described hereinafter.

A central processing unit (CPU) 11 is a main controller for controlling the overall operation of the automated currency control system 10. The CPU 11 of the present embodiment can execute various types of application software on a platform provided by an operating system (OS). An example of the application programs is the "unique currency control application" for controlling the issue, circulation, and exchange of the unique currency S in the business enterprise, that is, in the unique currency control space 100. The unique currency control application software according to the present embodiment includes commands written in a computer programming language to perform the following arithmetic processing:

(1) Compute asset allocation $a_j$ among each existing currency j in the business enterprise;
(2) Compute unit value of the unique currency S issued in the business enterprise, i.e., in the unique currency control space 100; and
(3) Compute the exchange rate between the unique currency S and each existing currency j, and record and control the circulation of the unique currency S issued in the form of electronic money.

A processor bus directly connected to an external pin of the CPU 11 interconnects the CPU 11 and a bus 20 via a bus bridge 12.

The bus bridge 12 of the present embodiment includes a data buffer for accommodating the speed difference between the processor bus and a system bus 31, a memory controller for controlling memory access to a random access memory (RAM) 13, and an accelerated graphic port (AGP) interface for connecting a video controller 15.

The RAM 13 is a writable volatile memory used to enable the CPU 11 to load execution program code and to write working data for the execution program. In general, the RAM 13 is formed of a plurality of dynamic RAM (DRAM) chips. An example of the execution program is the "unique currency control application" for controlling the issue, circulation, and exchange of the unique currency S in the business enterprise, that is, in the unique currency control space 100.

The automated currency control system 10 includes, in addition to the RAM 13, a read only memory (ROM) 14 which is used as a memory unit. The ROM 14 is nonvolatile and stores code such as a self-diagnosis program (power on self test (POST)) executed when power is supplied to the automated currency control system 10 and a basic input/output system (BIOS) for operating hardware. The ROM 14 may be formed of an electrically erasable and programmable read only memory (EEPROM).

The AGP interface is a bus specification, developed mainly by Intel Corporation, dedicated to video in order to achieve high-speed three-dimensional graphics rendering. The data transfer rate of an AGP bus is four times faster than that of a peripheral component interconnect (PCI) bus. The AGP bus is connected to the video controller 15.

The video controller 15 is a dedicated controller for controlling a screen on a display 16 in accordance with rendering commands from the CPU 11. The video controller 15 includes a frame memory (video random access memory (VRAM)) 17 for temporarily storing rendering information. The display 16 can be, for example, a cathode ray tube (CRT) display or a liquid crystal display (LCD).

The bus 20 is a common signaling channel including an address bus, a data bus, a control bus, and the like. For example, as the bus 20, the PCI bus and/or an industry standard architecture (ISA) bus are available for use. On the system bus 20, various peripheral units in accordance with the specifications of the PCI interface and/or the ISA interface are interconnected. An inherent I/O address (or memory address) is assigned to each peripheral unit on the bus 20. The CPU, that is, in a strict sense, the program executed by the CPU 11, designates the I/O address (or memory address), thus transferring data and commands to desired peripheral units.

A keyboard/mouse controller (KMC) 21 is a dedicated controller for processing input from a user using a keyboard 22 and a mouse 23. In response to detection of a scan code input from the keyboard 22 or a coordinate designation input from the mouse 23, the KMC 21 issues an interrupt request to the CPU 11.

A serial input/output (SIO) controller 24 is a peripheral controller for performing serial data exchange with units outside the automated currency control system 10. A serial port of the SIO controller 24 is provided with a modem 25 for modulating and demodulating transmission data on an analog telephone circuit. By establishing a Point-to-Point Protocol (PPP) connection with a predetermined access point (not shown) using the modem 25, the automated currency control system 10 is connected to the Internet 50, which is a worldwide wide area network.

On the Internet 50, numerous hosts or computer systems (which may be referred to as "remote systems" hereinafter) are interconnected based on the Transmission Control Protocol/Internet Protocol (TCP/IP). Some of the hosts function as servers (Web sites) for providing and delivering information via the Internet 50, and the other hosts function as clients for requesting the servers to provide information. In the present embodiment, disclosure and delivery of information can be tollable or can be free of charge. In the former case, any charging system can be used.

For example, an exchange market information provider 70 may be provided on the Internet 50. The exchange market information provider 70 always monitors fluctuations in the exchange rate $x_{jk}(t)$ for exchanging existing currency k for existing currency j and/or fluctuations in the exchange rate $x_{kj}(t)$ for exchanging existing currency j for existing currency k in the exchange market to which national/local currencies such as existing currencies A, B, C, D, and so forth are input. The exchange market information provider 70 also discloses or delivers this type of exchange market information via the Internet 50. The automated currency control system 10 according to the present embodiment may momentarily receive the exchange rate $x_{jk}(t)$ which momentarily fluctuates from the exchange market information provider 70. The delivery of exchange market information can be tollable or can be free of charge. In the former case, any charging system can be used. The exchange market information provider 70 may include a market database containing exchange rate fluctuation information in the exchange market.

The automated currency control system 10 according to the present embodiment may function as a Web site and may disclose or deliver information to numerous remote systems scattered on the Internet 50. In such a case, the automated currency control system 10 provides information concerning the issue and the circulation of the unique currency S in the unique currency control space 100 and the exchange rate between the unique currency S and each existing currency, i.e., each national/local currency. These data concerning the unique currency S can be obtained by executing the foregoing "unique currency control application". Considerations for providing information by the automated currency control system 10 can be tollable or can be free of charge. In the former case, any charging system can be used.

The host machines on the Internet 50 may be, for example, financial terminals or Web sites. The host machines receive, via the Internet 50, information on the issue and the circulation of the unique currency S and exchange market information such as the exchange rate $x_{si}(t)$ for exchanging each existing currency i (national/local currency) for the unique currency S and/or the exchange rate $x_{is}(t)$ for exchanging the unique currency S for existing currency i. Accordingly, the host machines can function as branch offices of the business enterprise in the unique currency control space 100.

As is known to those skilled in the art, file transfer can be performed on the Internet 50. The automated currency control system 10 can download a program file for installing the "unique currency control application" from a predetermined server on the Internet 50 based on the File Transfer Protocol (FTP) or the like.

A hard disk drive (HDD) 27 is an external storage unit for storing programs and data in a predetermined file format. In general, the HDD 27 has a relatively large capacity of a few gigabytes to a few tens of gigabytes. The HDD 27 is connected to the bus 20 through a hard disk interface 16. The interface standard for connecting the HDD 27 to the computer system includes, for example, the Integrated Drive Electronics (IDE).

Removable and portable recording media are mounted in a media drive 19, and the media drive 19 reads and writes data stored on the surface of each of these media. The media drive 19 and the bus 20 are interconnected through a media drive interface 18. The interface standard for connecting the media drive 19 to the bus 20 includes, for example, the Small Computer System Interface (SCSI).

The foregoing recording media include a magneto-optical (MO) disk, a compact disk read only memory (CD-ROM), a digital versatile disk (DVD), a floppy disk (FD), and the like. These types of recording media in general can store computer programs containing commands written in a computer programming language and other computer data in a computer-readable format. The foregoing "unique currency control application" according to the present embodiment is distributed on these recording media having recorded thereon the unique currency control application, and the unique currency control application can be installed in the HDD 27 via the media drive 19 in an executable format.

A network interface 29 interconnects the automated currency control system 10 and a network such as a local area network (LAN) 30 in accordance with a predetermined communication protocol such as "Ethernet". The LAN 30 is provided within, for example, the business enterprise, that is, in the unique currency control space 100. Though not shown, the LAN 30 may be formed of a plurality of network segments which are interconnected via a router. Alternatively, the LAN 30 may be a wide area network (WAN) interconnecting remote networks using a communication medium such as a leased line. In other words, the LAN 30 may be a network covering branch offices, branch stores, and places of business of the business enterprise, which are scattered in numerous countries.

At least one host or computer system (which may be referred to as a "remote system" hereinafter) is provided on the LAN 30. On the LAN 30, which is a local network limited to a single enterprise and/or a single business enterprise group, the automated currency control system 10 may disclose or deliver information to other remote systems. In such a case, the automated currency control system 10 provides information concerning the issue and the circulation of the unique currency S in the unique currency control space 100, the exchange rate $X_{si}(t)$ for exchanging each existing currency i (i.e., national currency or local currency) for the unique currency S and/or the exchange rate $x_{is}(t)$ for exchanging the unique currency S for each existing currency i. These data concerning the unique currency S can be obtained by executing the foregoing "unique currency control application". The delivery of these types of exchange market information can be tollable or can be free of charge.

The automated currency control system 10 can download a program file for installing the foregoing "unique currency control application" from a predetermined remote system on the LAN 30.

The LAN 30 and the Internet 50 may be interconnected through a router.

The host machines on the LAN 30 may be, for example, financial terminals or Web sites. These host machines receive, via the LAN 30, the information concerning the issue and the circulation of the unique currency S and the exchange market information such as the exchange rate $x_{si}(t)$ for exchanging each existing currency i (i.e., national currency or local currency) for the unique currency S and/or the exchange rate $x_{is}(t)$ for exchanging the unique currency S for each existing currency i. Accordingly, the host machines may function as branch offices of the business enterprise in the unique currency control space 100.

When the automated currency control system 10 is formed using a general computer system, a typical example of the system architecture is an IBM PC/AT compatible PC (IBM Corporation) or its successor, which are compliant with the so-called PC Open Architecture Developers' Group (OADG) specification. In order to form the automated currency control system 10 according to the present embodiment, numerous circuits and the like other than those shown in Fig. 2 are necessary. Since they are known to those skilled in the art and they do not form the subject-matter of the present invention, descriptions thereof are omitted. In order to simplify Fig. 2, only some of the connections between individual hardware blocks are shown.

C Ideal unique currency

Currencies in general represent a quantified amount of credit in a community. Currencies are required to be linked with the real economy and to be highly reliable. In particular, when the unique currency is operated as an "enterprise currency" which circulates within a specific business enterprise (or business enterprise group), the inventor of the present embodiments proposes that the unique currency should preferably have the following characteristics:

(1) Unique currency should prevent speculation

In order that the unique currency S prevents speculation, central controls are necessary. In the unique currency control space 100 shown in Fig. 1, the management and research department 101 performs the central control function. Since those who want to gamble can use existing local currencies such as the yen and the dollar, there are no harmful effects caused by prevention of speculation.

(2) Total amount of issued unique currency can be increased in accordance with economic growth without any limitation

For example, in the case of the gold standard which ensures exchangeability between currencies and gold, the total amount is finite. Therefore, the gold standard is not suitable for the introduction of the unique currency S according to the embodiment of the present invention.

(3) Unique currency cannot be forged

Due to the recent progress in manufacturing technologies, forgery of paper currencies and coins has become relatively easy. It is thus appropriate to stop using physical currencies such as paper currencies and coins and to issue the unique currency S in the form of so-called "electronic money" which can be safely circulated in a computer system. As a result, the safe circulation of the unique currency S is ensured.

(4) Unique currency is exchangeable for national/local currencies (foreign currencies)

Within the business enterprise or the business enterprise group, employees receive salaries in the unique currency S and deposit savings in the unique currency S. Therefore, the employees make their living only in the unique currency S. In the business enterprise, i.e., the unique currency control space 100, which is an economically closed world, the distribution of products and other economic activities can be performed only using the unique currency S. However, when performing transactions with other business enterprises and supplying products and services to individuals outside the business enterprise (such as general customers), it is assumed that there are many cases in which the unique currency S is used outside the business enterprise.

Therefore, the unique currency S is required to receive sufficient recognition and credit-worthiness in the real world. Also, the enterprise bank 110, that is, the Sony bank, is required to ensure exchangeability between the unique currency S and existing local currencies.

(5) Unique currency can be saved and transferred and can be used to make payments

For example, it is preferable that the enterprise bank 110 increase interest rates for the unique currency S higher than those for savings accounts in order to benefit people holding the unique currency S. It is also preferable that those who arrange loans in the unique currency S periodically receive detailed reports.

(6) Unique currency can be used all over the world

When the unique currency S achieves sufficient recognition and credit-worthiness in the real world, it is possible to use the unique currency S all over the world. For example, people can easily use the unique currency S all over the world without delay.

The unique currency S of the present embodiment can be operated in the form of "electronic money" in a membership system which is systematically and completely controlled.

For example, members and corporations qualified for membership each have an account in the enterprise bank 110. For these qualified members, the unique currency S can be issued in the form of electronic money, and the unique currency S can be exchanged for existing currencies. It is also possible to make a rule forbidding speculation, thus immediately expelling violators (or after a predetermined warning).

Financial terminals and Web sites all over the world can function as branch offices. While security for currency circulation is maintained, the cost of establishing branch offices is reduced.

Since the unique currency S is used in the form of electronic money, the circulation of the unique currency S within the unique currency control space 100 is easily tracked. For example, currency circulation records can be analyzed to detect the use of the unique currency S for illegal purposes, such as speculation purposes. Furthermore, it is possible to make good use of such analysis in finding new businesses.

D Preparation for introduction of unique currency

It is necessary to prepare beforehand the following conditions for the introduction of the unique currency S in a particular business enterprise, namely, Sony:

(1) Confirm whether there are legal controls in each country. In particular, it is expected that various controls will be imposed on taxation.
(2) Determine the interval between points at which the exchange rates of the new currency are updated.
(3) Learn hedge fund strategies and determine the mechanism in which the use of the new currency for speculation purposes is forbidden.
(4) Examine the complexity of the system required to be installed in each stage of the introduction of the unique currency. Examine the feasibility considering human and fund expenditures required in the introduction of the unique currency.

E Steps for implementing unique currency

(1) First step: limited use of unique currency in accounting inside business enterprise accounting inside business enterprise

The unique currency unit S defined by the above-described currency basket is introduced. Accounting of a single business enterprise is made universal among branch offices and branch stores all over the world using the unique new currency unit S.

The branch offices and the branch stores in different countries are informed of exchange rates between the unique currency S and existing national/local currencies by the enterprise bank 110 or the management and research department 101 as occasion calls in a top-down system using multicasting or sequential communication. In informing the branch offices, information delivery techniques using the Internet 50 can be employed. Whenever a local currency is input to the business enterprise, accounting is processed in the unique currency S at any of the branch offices and the branch stores all over the world.

The unified internal accounting of the business enterprise is performed using the universal currency unit, and hence the processing becomes simplified and easy to understand. In the case of supplying a certain product, the cost of the product can be computed in the unique currency S by adding "universal price" to "place-dependent cost".

Also, exchanges between the unique currency S and existing currencies can be limited to those performed by the business enterprise in transactions with individuals or enterprises outside the business enterprise. In doing so, the number of exchanges can be minimized. A central authority such as the enterprise bank 110 or the management and research department 101 performs centralized control of information concerning exchanges of large amounts in existing currencies, thus minimizing the number of exchanges between the unique currency S and existing currencies in transactions with individuals or enterprises outside the business enterprise.

(2) Second step: limited use of unique currency outside business enterprise

The enterprise bank 110 prepares accounts in the unique currency unit S for employees, respectively, and the business enterprise makes payments for salaries of the employees in the unique currency S.

The enterprise bank 110 arranges a mechanism in which the unique currency S can be exchanged for an arbitrary existing currency at any time in response to requests from the employees. The enterprise bank 110 may set interest rates for accounts in the unique currency S higher than those in existing currencies.

The enterprise bank 110 may allow affiliates to use the unique currency S in accordance with requests by the affiliates.

Since the business enterprise is not required to pay salaries of the employees in existing currencies, the enterprise bank 110 can further reduce existing-currency reserves. At this stage, it is necessary to determine that no problem arises in the unique currency control space 100.

(3) Third step: unlimited external use of unique currency

The use of the unique currency S is widely disseminated among general requesters outside the business enterprise as stable electronic money supported by the business enterprise.

The enterprise bank 110 exchanges the unique currency S for an existing currency or vice versa at any time. Exchange rates between the unique currency S and existing currencies are not entrusted to the open market outside the business enterprise. The enterprise bank 110 or the management and research department 101 determines the exchange rates in a top-down system, thus efficiently eliminating the use of the unique currency S for speculation purposes.

The enterprise bank 110 sets interest rates for savings in the unique currency S. Also, various types of deposit accounts such as time deposit accounts and checking accounts can be opened at the enterprise bank 110.

The unique currency S can be linked with various types of pseudo-currencies, such as "points" and "mileage", controlled by other business enterprises, thus reinforcing the mechanism which locks in customers. Unlike conventional pseudo-currencies, the unique currency S may be such that exchanges or conversion from points to the unique currency S and vice versa are approved.

Purchases of products of the business enterprise and affiliated products can be made in the unique currency S. In such cases, the products may be purchased at a special price or at a discount. As a result, the use of the unique currency S is promoted.

The motto of the unique currency S is to be a stable currency which is closely related to the real economy while making every effort to eliminate speculation.

Companies, such as manufacturers, and individuals who dislike currency value fluctuations and seek for stable currencies may convert part of the assets thereof into the assets denominated in the stable unique currency S. As a result, it is expected that a large amount of funds will be gathered at the enterprise bank 110 by the medium of the unique currency S. In other words, the enterprise bank 110 is stabilized as a new type of bank and receives steady revenues. By optimizing the management of an abundance of funds, the enterprise bank 110 can obtain a third source of funds, which is comparable to stocks and bonds.

As the unique currency S is disseminated beyond a single business enterprise, it is possible to naturally and intensely lock in customers for products of the business enterprise and products of the affiliates.

By configuring the unique currency S in the form of "electronic money" which circulates in a computer digital space, a central authority such as the enterprise bank 110 or the management and research department 101 can easily exercise centralized control on the unique currency S. In other words, the central authority achieves substantially complete control of the flow of the unique currency S. For example, the central authority can conduct consumer behavior surveys, which are conducted by a few card issuing companies.

F Expected advantages of introduction of unique currency

(1) Within the business enterprise, the number of exchanges can be reduced to a minimum.

Using the unique currency S of the present embodiment, the number of exchanges within the business enterprise can be reduced to zero. The number of exchanges outside the business enterprise is also minimized. By increasing buffers in the enterprise bank 110, i.e., by increasing national/local-currency holdings, the number of exchanges can be reduced to be as close to zero as possible.

(2) The locking in of customers is reinforced.

The unique currency S within a particular business enterprise (or business enterprise group) can be stated differently as an "enterprise currency". Those who are going to purchase products of the business enterprise using the enterprise currency are reliably supplied with products at a low price. Therefore, the locking in of customers is reinforced.

(3) Funds can be collected from individuals and business enterprises who dislike speculation.

The unique currency S of the present embodiment is closely linked with the real economy. It is thus possible to collect an abundance of funds and to perform fund management. The business enterprise, which is the parental body for issuing the unique currency S, is protected from going bankrupt in a community. In other words, the business enterprise itself becomes essential to economic activities.

(4) Funds and revenues in the business enterprise can be practically doubled.

The enterprise bank 110 can operate foreign currencies, that is, national/local currencies, input thereto. The enterprise bank 110 can issue the same amount (same value) of the unique currency S as the amount of foreign currency holdings and make good use of the unique currency S in funds transfer within the business enterprise.

(5) The flow of money within consumers and the business enterprise can be monitored.

By configuring the unique currency S in the form of electronic money, all sequential transfers of the unique currency S are logged and controlled by a computer. Analysis of the log data reveals consumer behavior and economic fluctuations. It is also possible to make use of the data processing results in finding new businesses.

Appendix

The present invention has been described in detail using the preferred embodiment. It is to be understood that the invention is intended to cover various modifications and equivalent arrangements included within the spirit and scope of the present invention.
In the foregoing description, the case of the business enterprise owning the gross assets in a plurality of countries, that is, in a plurality of local currencies, is described by way of example. However, the present invention is not limited to this case. For example, the present invention is applicable to a case in which, instead of the business enterprise, an individual or the owner of assets which is not incorporated as a company issues a unique currency in order to maintain the value of the gross assets in a plurality of local currencies.
The present invention has been described with reference to the embodiment by way of example, and it is to be understood that the invention is not limited to the embodiment.

**Claims**

1.  A unique-currency control method for defining a unique currency unit for an owner of assets owned in a plurality of existing currencies, comprising:

    (a) a step of estimating the gross asset value owned by the asset owner in each of the existing currencies;
    (b) a step of computing the ratios among the asset values owned by the asset owner in the existing currencies; and
    (c) a step of computing a weighted average based on current exchange rates among the existing currencies, the exchange rates being weighted by the ratios among the asset values in the existing currencies, thus determining that the weighted average is used as the unique currency unit.

2.  A unique-currency control method for defining a unique currency unit for an owner of assets owned in a plurality of existing currencies, comprising:

    (a) a step of estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_j x_{kj}(0)w_j(0) ;$$

(b) a step of computing the ratio $a_j$ of the asset value $x_{kj}(0) \cdot w_j(0)$ owned at time t = 0 by the asset owner in each existing currency j to the gross asset value based on the following equation:

$$a_j = \frac{x_{kj}(0) \cdot w_j(0)}{\sum_i x_{ki}(0) \cdot w_i(0)} ;$$

and

(c) a step of computing a weighted average ls(0) using an exchange rate $x_{jk}(0)$ for exchanging existing currency k for each existing currency j at time t = 0, the exchange rate $x_{jk}(0)$ being weighted by the ratio $a_j$ of the asset value in each existing currency j based on the following equation, thus determining that the weighted average is used as the unique currency unit:

$$1_s(0) = \sum_j a_j x_{jk}(0) ,$$

where $x_{jk}(t)$, $w_j(t)$, $L_k(t)$, and $1_s(t)$ are functions of time t.

**3.** A unique-currency control system for defining a unique currency unit for an owner of assets owned in a plurality of existing currencies, comprising:

(a) estimating means for estimating the gross asset value owned by the asset owner in each of the existing currencies;
(b) computing means for computing the ratios among the asset values owned by the asset owner in the existing currencies; and
(c) determining means for computing a weighted average based on current exchange rates among the existing currencies, the exchange rates being weighted by the ratios among the asset values in the existing currencies, thus determining that the weighted average is used as the unique currency unit.

**4.** A unique-currency control system for defining a unique currency unit for an owner of assets owned in a plurality of existing currencies, comprising:

(a) estimating means for estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_j x_{kj}(0)w_j(0) ;$$

(b) computing means for computing the ratio $a_j$ of the asset value $x_{kj}(0) \cdot w_j(0)$ owned at time t = 0 by the asset owner in each existing currency j to the gross asset value based on the following equation:

$$a_j = \frac{x_{kj}(0) \cdot w_j(0)}{\sum_i x_{ki}(0) \cdot w_i(0)} ;$$

and

(c) determining means for computing a weighted average ls(0) using an exchange rate $x_{jk}(0)$ for exchanging existing currency k for each existing currency j at time t = 0, the exchange rate $x_{jk}(0)$ being weighted by the ratio $a_j$ of the asset value in each existing currency j based on the following equation, thus determining that the weighted average is used as the unique currency unit:

$$l_s(0) = \sum_j a_j x_{jk}(0) ,$$

where $x_{jk}(t)$, $w_j(t)$, $L_k(t)$, and $l_s(t)$ are functions of time t.

5. An exchange rate computing method for computing the exchange rate between unique currency S, uniquely defined by an owner of assets owned in a plurality of existing currencies, and existing currency i, comprising the step of computing an exchange rate $x_{is}(t)$ for exchanging unique currency S for existing currency i at time t based on the following equation:

$$x_{is}(t) = \sum_j x_{ij}(t) a_j x_{jk}(0) ,$$

where:

$x_{ij}(t)$ = exchange rate for exchanging existing currency j for existing currency i at time t; and
$a_j$ = ratio of assets owned in existing currency j by the asset owner.

6. An exchange rate computing method according to Claim 5, further comprising the step of computing an exchange rate $x_{si}(t)$ for exchanging existing currency i for unique currency S at time t based on the following equation:

$$x_{si}(t) = \frac{1}{x_{is}(t)} = \frac{1}{\sum_j x_{ij}(t) a_j x_{jk}(0)} .$$

7. An exchange rate computing system for computing the exchange rate between unique currency S, uniquely defined by an owner of assets owned in a plurality of existing currencies, and existing currency i, comprising first computing means for computing an exchange rate $x_{is}(t)$ for exchanging unique currency S for existing currency i at time t based on the following equation:

$$x_{is}(t) = \sum_j x_{ij}(t) a_j x_{jk}(0) ,$$

where:

$x_{ij}(t)$ = exchange rate for exchanging existing currency j for existing currency i at time t; and
$a_j$ = ratio of assets owned in existing currency j by the asset owner.

8. An exchange rate computing system according to Claim 7, further comprising second computing means for computing an exchange rate $x_{si}(t)$ for exchanging existing currency i for unique currency S at time t based on the following equation:

$$x_{si}(t) = \frac{1}{x_{is}(t)} = \frac{1}{\sum_{j} x_{ij}(t)a_j x_{jk}(0)} .$$

9. A weight determining method for determining a weight for each existing currency by an owner of assets in a plurality of existing currencies, comprising the step of using the ratio $a_j$ of assets owned in existing currency j by the asset owner to the gross asset value as a weight for existing currency j.

10. A weight determining method for determining a weight for each existing currency by an owner of assets in a plurality of existing currencies, comprising:

(a) a step of estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_{j} x_{kj}(0)w_j(0) ;$$

and

(b) a step of computing the ratio $a_j$ of the asset value $x_{kj}(0) \cdot W_j(0)$ owned at time t = 0 by the asset owner in each existing currency j to the gross asset value based on the following equation, thus determining that the ratio $a_j$ is used as a weight for existing currency j:

$$a_j = \frac{x_{kj}(0) \cdot w_j(0)}{\sum_{i} x_{ki}(0) \cdot w_i(0)} .$$

11. A weight determining system for determining a weight for each existing currency by an owner of assets in a plurality of existing currencies, comprising using means for using the ratio $a_j$ of assets owned in existing currency j by the asset owner to the gross asset value as a weight for existing currency j.

12. A weight determining system for determining a weight for each existing currency by an owner of assets in a plurality of existing currencies, comprising:

(a) estimating means for estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_k(0) = \sum_{j} x_{kj}(0)w_j(0) ;$$

and

(b) determining means for computing the ratio $a_j$ of the asset value $x_{kj}(0) \cdot w_j(0)$ owned at time $t = 0$ by the asset owner in each existing currency j to the gross asset value based on the following equation, thus determining that the ratio $a_j$ is used as a weight for existing currency j:

$$a_j = \frac{x_{kj}(0) \cdot w_j(0)}{\sum_i x_{ki}(0) \cdot w_i(0)} .$$

13. A program storage medium having stored therein a computer program in a computer-readable format for instructing a computer system to perform a process for defining a unique currency unit for an owner of assets owned in a plurality of existing currencies, said computer program comprising:

(a) a step of estimating the gross asset value owned by the asset owner in each of the existing currencies;
(b) a step of computing the ratios among the asset values owned by the asset owner in the existing currencies; and
(c) a step of computing a weighted average based on current exchange rates among the existing currencies, the exchange rates being weighted by the ratios among the asset values in the existing currencies, thus determining that the weighted average is used as the unique currency unit.

14. A program storage medium having stored therein a computer program in a computer-readable format for instructing a computer system to perform a process for defining a unique currency unit for an owner of assets owned in a plurality of existing currencies, said computer program comprising:

(a) a step of estimating the gross asset value of the asset owner by computing, using an exchange rate $x_{kj}(0)$ for exchanging existing currency j for existing currency k at time $t = 0$, the total asset value $L_k(0)$ denominated in existing currency k of assets $w_j(0)$ owned by the asset owner in each existing currency j based on the following equation:

$$L_k(0) = \sum_j x_{kj}(0)w_j(0) ;$$

(b) a step of computing the ratio $a_j$ of the asset value $x_{kj}(0) \cdot w_j(0)$ owned at time $t = 0$ by the asset owner in each existing currency j to the gross asset value based on the following equation:

$$a_j = \frac{x_{kj}(0) \cdot w_j(0)}{\sum_i x_{ki}(0) \cdot w_i(0)} ;$$

and

(c) a step of computing a weighted average ls(0) using an exchange rate $x_{jk}(0)$ for exchanging existing currency k for each existing currency j at time $t = 0$, the exchange rate $x_{jk}(0)$ being weighted by the ratio $a_j$ of the asset value in each existing currency j based on the following equation, thus determining that the weighted average is used as the unique currency unit:

$$l_s(0) = \sum_j a_j x_{jk}(0) .$$

15. A program storage medium having stored therein a computer program in a computer-readable format for instructing a computer system to perform a process for computing the exchange rate between unique currency S, uniquely defined by an owner of assets owned in a plurality of existing currencies, and existing currency i, said computer program comprising the step of computing an exchange rate $x_{is}(t)$ for exchanging unique currency S for existing currency i at time t based on the following equation:

$$x_{is}(t) = \sum_{j} x_{ij}(t) a_j x_{jk}(0) ,$$

where:

$x_{ij}(t)$ = exchange rate for exchanging existing currency j for existing currency i at time t; and
$a_j$ = ratio of assets owned in existing currency j by the asset owner.

**16.** A program storage medium according to Claim 15, said computer program further comprising the step of computing an exchange rate $x_{si}(t)$ for exchanging existing currency i for unique currency S at time t based on the following equation:

$$x_{si}(t) = \frac{1}{x_{is}(t)} = \frac{1}{\sum_{j} x_{ij}(t) a_j x_{jk}(0)} .$$

**17.** A program storage medium having stored therein a computer program in a computer-readable format for instructing a computer system to perform a process for determining a weight for each existing currency by an owner of assets in a plurality of existing currencies, said computer program comprising the step of using the ratio $a_j$ of assets owned in existing currency j by the asset owner to the gross asset value as a weight for existing currency j.

**18.** A program storage medium having stored therein a computer program in a computer-readable format for instructing a computer system to perform a process for determining a weight for each existing currency by an owner of assets in a plurality of existing currencies, said computer program comprising:

(a) a step of estimating the gross asset value of the asset owner by computing, using an exchange rate $x_{kj}(0)$ for exchanging existing currency j for existing currency k at time t = 0, the total asset value $L_k(0)$ denominated in existing currency k of assets $w_j(0)$ owned by the asset owner in each existing currency j based on the following equation:

$$L_x(0) = \sum_{j} x_{kj}(0) w_j(0) ;$$

and

(b) a step of computing the ratio $a_j$ of the asset value $x_{kj}(0) \cdot w_j(0)$ owned at time t = 0 by the asset owner in each existing currency j to the gross asset value based on the following equation, thus determining that the ratio $a_j$ is used as a weight for existing currency j:

$$a_j = \frac{x_{kj}(0) \cdot w_j(0)}{\sum_{i} x_{ki}(0) \cdot w_i(0)} .$$

**19.** A data processing system for controlling a unique currency for an owner of assets in a plurality of existing currencies, comprising:

(a) a computer processor for processing data;

(b) data storage means for storing data;

(c) first means for initializing said data storage means (b);

(d) second means for executing data processing concerning an estimate of the gross asset value owned by the asset owner in each of the existing currencies;

(e) third means for executing data processing concerning computation of the ratios among the asset values owned by the asset owner in the existing currencies; and

(f) fourth means for executing data processing concerning determination of a value of the unique currency for the asset owner;

wherein said fourth means (f) computes a weighted average based on current exchange rates among the existing currencies, the exchange rates being weighted by the ratios among the asset values in the existing currencies, thus determining that the weighted average is used as the value of the unique currency unit.

**20.** A data processing system for controlling a weight for each existing currency by an owner of assets in a plurality of existing currencies, comprising:

(a) a computer processor for processing data;

(b) data storage means for storing data;

(c) first means for initializing said data storage means (b); and

(d) second means for executing data processing concerning determination of a weight for each existing currency j;

wherein said second means (d) determines that the ratio $a_j$ of assets owned in existing currency j by the asset owner to the gross asset value is used as a weight for existing currency j.

# FIG. 1

# FIG. 2

EP 1 115 079 A2